# EUROPÄISCHE PATENTSCHRIFT

(11) **EP 0 368 064 B1**
(45) Veröffentlichungstag und Bekanntmachung des Hinweises auf die Patenterteilung: **17.03.1993**
(21) Anmeldenummer: 89119561.2
(22) Anmeldetag: 21.10.1989
(51) Int. Cl.: B29C 45/17

(54) **Spannvorrichtung für Werkzeuge mit über seitliche Aufspannflächen vorstehenden Spannbolzen**
Clamping device for moulds with clamping bolts protruding from lateral clamping surfaces
Dispositif de serrage pour moules avec des tiges de serrage en saillie sur des surfaces de serrage latérales

(30) Priorität: 08.11.1988 DE 8813924 U
(43) Veröffentlichungstag der Anmeldung: 16.05.1990
(73) Patentinhaber: Wörner, Alois, D-77815 Bühl (DE)
(72) Erfinder: Wörner, Alois, D-77815 Bühl (DE)
(74) Vertreter: Geitz, Heinrich, Dr.-Ing.

(56) Entgegenhaltungen:
- EP-A- 0 184 744
- DE-A- 3 426 157
- GB-A- 796 955
- GB-A- 903 728
- GB-A- 1 379 613
- GB-A- 2 108 622
- US-A- 2 468 406
- KUNSTSTOFFE, Band 74, Nr. 11, November 1984, Seite 671, München, DE; "Verkürzung von Werkzeug-Wechselzeiten"

## Beschreibung

Die Erfindung betrifft eine Spannvorrichtung für Werkzeuge mit über seitliche Aufspannflächen vorstehenden und in der Nähe ihrer freien Enden Querausnehmungen aufweisenden Spannbolzen, mit einer Aufnahmebohrungen für die Werkzeug-Spannbolzen und diese Aufnahmebohrungen rechtwinklig schneidende Lagerbohrungen aufweisenden Schnellspannplatte und mit in den Lagerbohrungen drehbar und axialverschiebbar aufgenommenen Verriegelungsstangen mit in der Kupplungslage in die Querausnehmungen der Werkzeug-Spannbolzen eingreifenden und mit diesen durch Drehung verspannbaren Spannexzentern.

Eine bekannte Spannvorrichtung dieser Art, die in der DE-OS 34 44 800 beschrieben ist, dient zum Spannen von Spritzgießformen mit zwei Formhälften, über deren seitliche Aufspannflächen Spannbolzen vorstehen, die in der Nähe ihrer von den Aufspannflächen abgewandten Enden Querausnehmungen in Gestalt einseitig offener U-förmiger Quernuten haben. Diese Spannvorrichtung umfaßt zwei bei bestimmungsgemäßer Verwendung an sich vertikal erstreckenden Aufnahmeplatten einer Spritzgießmaschine befestigte Schnellspannplatten mit rechtwinklig zu deren Flächenerstreckungen verlaufenden Aufnahmebohrungen für die Spannbolzen der Formhälften und mit in Lagerbohrungen, die sich jeweils in der Ebene der Schnellspannplatten erstrecken und die Aufnahmebohrungen für die Werkzeug- Spannbolzen außermittig schneiden, axialbeweglich und drehbar aufgenommene Verriegelungsstangen.

Die vorbekannte Spannvorrichtung hat sich zwar bewährt, erscheint aber in Bezug auf ihre Handhabung noch verbesserungsbedürftig.

Ausgehend von der Spannvorrichtung nach dem Oberbegriff des Schutzanspruchs 1 ist die erfindungsgemäße Verbesserung dadurch gekennzeichnet, daß zwischen den Verriegelungsstangen und der diese jeweils in Lagerbohrungen aufnehmenden Schnellspannplatte formschlüssig zusammenwirkende Mittel zur Begrenzung der Axialbeweglichkeit der Verriegelungsstangen zwischen zwei axialen Endlagen und zur Sicherung gegen Drehung im Verschiebebereich zwischen diesen Endlagen vorgesehen sind.

Während bei der vorbekannten Spannvorrichtung die Verriegelungsstangen nach Gefühl aus der die Kupplungslage mit den Werkzeug-Spannbolzen kennzeichnenden Endlage in eine Entriegelungslage herausgezogen werden mußten, in der die Spannexzenter nicht mehr in die Querausnehmungen der entsprechenden Werkzeug-Spannbolzen eingreifen und diese somit freigeben, handelt es sich bei der Erfindung darum, daß die der Kupplungslagen mit einem Werkzeug-Spannbolzen entsprechende eine Endlage und die demgegenüber zurückgezogene andere Endlage durch die erwähnten Sicherungsmittel fixiert sind und im Verschiebebereich zwischen diesen Endlagen eine Drehung der Verriegelungsstangen unterbunden ist. Es liegt somit eine eindeutige Fixation der beiden Endlagen der Verriegelungsstangen sowie im Bereich dazwischen eine Verdrehsicherung vor.

Gemäß einer Weiterbildung der Erfindung umfassen die Mittel zur Begrenzung der axialen Verschiebbarkeit der Verriegelungsstangen zwischen den beiden genannten Endlagen und zur Verdrehsicherung im Verschiebebereich zwischen diesen Endlagen eine Längsnut und einen in diese eingreifenden Sicherungszapfen, die in den erwähnten Endlagen außer Eingriff miteinander gelangen. Die Verdrehsicherung ist somit nur im Bereich zwischen den erwähnten Endlagen wirksam, so daß beispielsweise ein zufälliges Lösen einer Verriegelungsstange in der Kupplungslage mit einem Werkzeug-Spannbolzen und eine Axialverschiebung aus der Kupplungslage nicht möglich ist.

Eine andere Weiterbildung der Erfindung sieht vor, daß sich beidseitig an die Längsnut jeder Verriegelungsstange, in die der zugeordnete Sicherungszapfen eingreift, nach voneinander abgewandten Seiten Umfangsnuten anschließen, in die in den Endlagen der jeweils zugeordnete Sicherungszapfen eingreift und in diesen Endlagen eine Drehung um die Verriegelungsstangen-Längsachse entsprechend der jeweiligen Umfangserstreckung der Umfangsnuten ermöglicht.

Durch eine derartige Ausbildung der Spannvorrichtung ist sichergestellt, daß beim Einschieben einer Verriegelungsstange in die Kupplungslage mit der Querausnehmung eines Werkzeug-Spannbolzens der Spannexzenter immer in einer Stellung außerhalb seiner Spannlage steht und erst nach vollständigem Einschieben in der betreffenden Endlage der Verriegelungsstange durch deren Drehung um ihre Längsachse in Spannlage mit der Querausnehmung des betreffenden Werkzeug-Spannbolzens bringbar ist.

Eine besonders einfache Ausbildung der erfindungsgemäßen Spannvorrichtung wird dann erreicht, wenn die Längsnut und die Umfangsnuten, die gemeinsam eine Sicherungskulisse bilden, sich jeweils in den Lagerzapfen der Verriegelungsstangen erstrecken und die Sicherungszapfen in quer zu den Lagerbohrungen verlaufenden Bohrungen der Schnellspannplatten aufgenommen sind sowie in die Lagerbohrungen hineinragen und dabei in die erwähnten Nuten der Sicherungskulisse der jeweiligen Verriegelungsstange eingreift.

Anhand der beigefügten Zeichnung soll eine Ausführungsform der erfindungsgemäßen Spannvorrichtung erläutert werden. In schematischen Ansichten zeigen:
Fig. 1 zwei im Abstand voneinander stehende Schnellspannplatten mit je einer aus einer Lagerbohrung herausgezogenen Verriegelungsstange und mit zwei gesondert dargestellten Spannbolzen eines im übrigen nicht gezeigten Werkzeugs in einer perspektivischen Darstellung,
Fig. 2 eine Verriegelungsstange für sich allein in einer gegenüber Fig. 1 vergrößterten Perspektivansicht,
Fig. 3 eine stirnseitige Ansicht der Verriegelungsstange mit Blick gemäß Pfeil III in Fig. 2 auf einen stirnendigen Lagerzapfen und einen Spannexzenter,
Fig. 4 einen Querschnitt durch die Verriegelungsstange im Bereich einer sich über einen Umfangswinkel von etwa 180° erstreckenden Quernut,
Fig. 5 in einer Ansicht ähnlich Fig. 4 einen Querschnitt durch die Verriegelungsstange im Bereich einer sich über etwa 90° Umfangswinkel erstreckenden Quernut

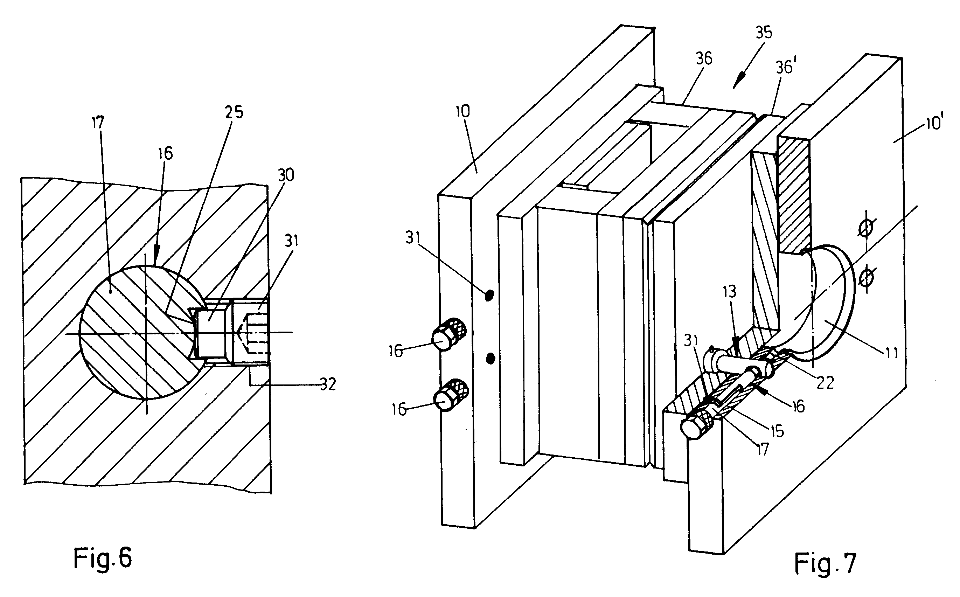

Fig. 6 in einem rechtwinklig zu einer Lagerbohrung mit einer darin aufgenommenen Verriegelungsstange verlaufenden ausschnittsweisen Querschnitt durch eine Schnellspannplatte und
Fig. 7 eine zwischen zwei Schnellspannplatten, die bei bestimmungsgemäßer Verwendung ihrerseits an den Aufnahmeplatten einer - nicht gezeigten - Spritzgießmaschine fest montiert sind, aufgenommene Spritzgießform in einer perspektivischen Ansicht.

Die in der Zeichnung veranschaulichte Spannvorrichtung dient zum Spannen von Werkzeugen mit über seitliche Aufspannflächen vorstehenden und in der Nähe ihrer freien Enden Querausnehmungen aufweisenden Spannbolzen. In aller Regel handelt es sich bei derartigen Werkzeugen um Spritzgießformen, die bei bestimmungsgemäßer Verwendung mit ihrer einen Formhälfte an einer feststehenden Aufnahmeplatte einer Spritzgießmaschine, hingegen mit der anderen Formhälfte an einer bewegbaren Maschinen-Aufnahmeplatte befestigt sind.

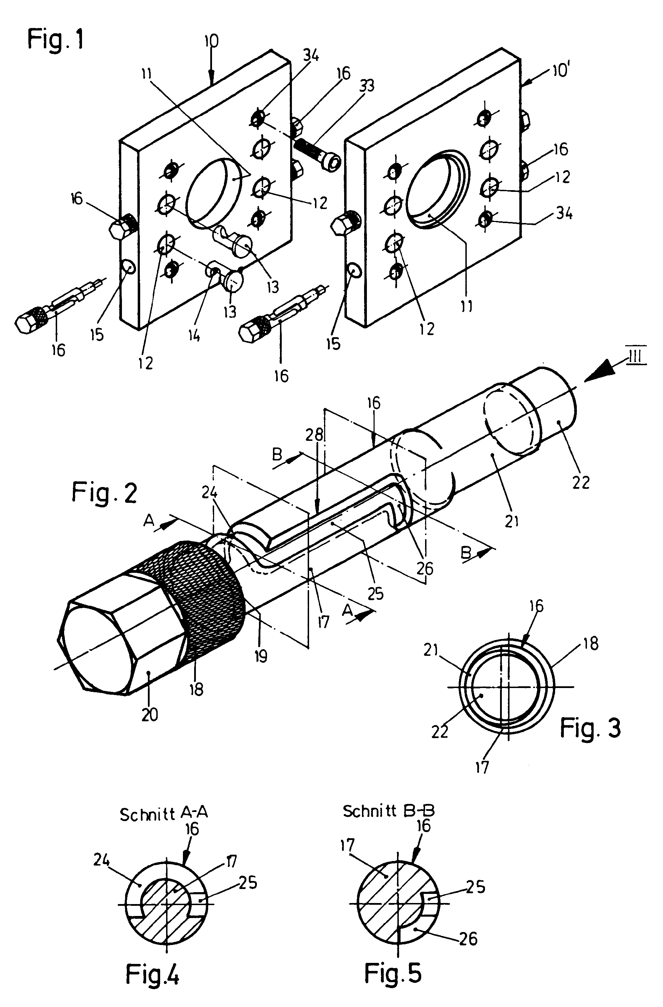

Die in Fig. 1 gezeigten Schnellspannplatten 10, 10′ haben je eine zentrische Mittelausnehmung 11 und beidseitig von dieser jeweils zwei Aufnahmebohrungen 12, die sich quer zur Flächenausdehnung der Schnellspannplatten durch diese hindurcherstrecken und in denen bei bestimmungsgemäßer Verwendung die über seitliche Aufspannplatten der zu spannenden Werkzeuge vorstehenden Spannbolzen 13 aufgenommen sind. Diese Spannbolzen sind in der Nähe ihrer von der jeweiligen Werkzeug-Spannfläche entfernten Enden mit Querausnehmungen 14 in Form einseitig offener U-förmiger Nuten versehen. Ferner erstrecken sich in der Ebene der Schnellspannplatten vier Lagerbohrungen 15, welche die Aufnahmebohrungen für die Werkzeug-Spannbolzen außermittig schneiden. In diesen Lagerbohrungen sind Verriegelungsstangen 16 axialbeweglich und drehbar gelagert.

Die Verriegelungsstangen 16 haben einen den Lagerbohrungen angepaßten Zapfenabschnitt 17, der auf einer Seite von einem mit einer Rändelung 18 versehenen Ringbund 19 begrenzt ist, an den sich eine Schlüsselansatzfläche 20 anschließt.

Auf der anderen Seite folgt auf den Zapfenabschnitt 17 ein Spannexzenter 21 und an diesen schließt sich ein koaxial zum Zapfenabschnitt verlaufender Lagerzapfen 22 an, dessen Durchmesser gegenüber dem Zapfenabschnitt reduziert ist.

In dem den Lagerbohrungen in den Schnellspannplatten 10, 10′ angepaßten Zapfenabschnitt 17 der Verriegelungsstangen erstreckt sich in der Nähe des Ringbundes 19 eine Umfangsnut 24 über einen Umfangswinkel von etwa 180°, an die sich eine axialgerichtete Längsnut 25 anschließt, die auf der zum Spannexzenter 22 hinweisenden Seite in eine weitere Umfangsnut 26 mit einer Umfangserstreckung von etwa 90° übergeht. Die beiden Umfangsnuten 24, 26 und die Längsnut 25 im Zapfenabschnitt 17 bilden eine Sicherungskulisse 28. Bei in den Lagerbohrungen der Schnellspannplatten aufgenommenen Verriegelungsstangen 16 greift jeweils als Sicherungszapfen 30 der Endabschnitt einer Sicherungsschraube 31, die in senkrecht zur Flächenerstreckung der Schnellspannplatten angeordneten Gewindebohrungen 32 aufgenommen sind, in die Sicherungskulisse 28 ein. Angesichts des Eingriffs eines Sicherungszapfens in die Sicherungskulisse jeder Verriegelungsstange sind deren Axialbewegbarkeit und in den jeweiligen Endlagen die Drehbarkeit begrenzt.

Die axiale Länge der Lagerzapfen 17 der Verriegelungsstangen ist so bemessen, daß bei voll in die Lagerbohrungen eingeschobenen Verriegelungsstangen, wenn der jeweilige Sicherungszapfen 30 im Bereich der sich etwa über 180° erstreckenden Umfangsnut 24 steht, die Spannexzenter 21 in den Aufnahmebohrungen 12, für die Werkzeug-Spannbolzen 13 stehen, um bei der Halterung eines Werkzeugs durch Verdrehung um die Verriegelungsstangen-Längsachse mit den Querausnehmungen 14, 14′ der Spannbolzen verspannt zu werden. In der Ausziehstellung der Verriegelungsbolzen, die durch die dem Spannexzenter 21 benachbarte, sich über etwa 90° Umfangswinkel erstreckende Umfangsnut 26 begrenzt ist, sind hingegen die Spannexzenter 21 mit den sich von diesen forterstreckenden Lagerzapfen 22 aus dem Bereich der Lagerbohrungen in den Schnellspannplatten zurückgezogen. Durch Drehung der Verriegelungsstangen in der Ausziehlage werden diese angesichts des Eingriffs des Sicherungszapfens 30 in die sich über etwa 90° erstreckende Umfangsnut 26 arretiert und ein Einschieben gelingt erst nach einer Verdrehung der Verriegelungsstangen um ihre Längsachsen dergestalt, daß die Sicherungszapfen 30 im Bereich der sich axial erstreckenden Längsnuten 25 stehen.

Bei bestimmungsgemäßer Verwendung sind die aus Fig. 1 ersichtlichen Schnellspannplatten 10, 10′ in im einzelnen hier nicht interessierender Weise beispielsweise mittels Schrauben 33, die in Schraubenlöcher 34 eingreifen, aneinander gegenüberliegenden Aufnahmeplatten etwa einer Spritzgießmaschine so befestigt, daß gleichermaßen die Mittelausnehmungen 11 und die Aufnahmebohrungen 12 der beiden Schnellspannplatten miteinander fluchten. Wenn nun eine Spritzgießform 35, oder ein anderes mit entsprechenden Spannbolzen ausgerüstetes Werkzeug, gespannt werden soll, müssen die Verriegelungsstangen 16 in ihre durch die Sicherungskulisse 28 begrenzte Ausziehlage gebracht und in dieser Position durch Eingriff der Sicherungszapfen 30 in die dem jeweiligen Spannexzenter 21 benachbarte Umfangsnut 26 arretiert werden. Außerdem müssen die Schnellspannplatten 10, 10′ in einem Abstand voneinander stehen, der größer ist als die Breitenerstrekkung der zu spannenden Spritzgießform, einschließlich der seitlich vorstehenden Spannbolzen.

Nach diesen Montagevorbereitungen kann eine Spritzgießform 35 mit zwei Formhälften 36, 36′ in der aus Fig. 7 ersichtlichen Weise so montiert werden, daß diese zwischen die an den Aufnahmeplatten einer - nicht gezeigten - Spritzgießmaschine befestigten Schnellspannplatten 10, 10′ lagerichtig eingeführt und dann zunächst die Spannbolzen 13 der einen Formhälfte in die Aufnahmebohrungen einer der Spannplatten eingeführt werden, worauf die Verriegelungsstangen 16 nach Entriegelung in ihrer Ausziehlage infolge Drehung um ihre Längsachsen axial in die Lagerbohrungen 15 eingeschoben werden. Dabei greifen die Spannexzenter 21 in die Querausnehmungen 14 der in den Aufnahmebohrungen 12 dann aufgenommenen Spannbolzen 13 ein und die an die Spannexzenter angrenzenden Lagerzapfen 22 werden in entsprechend bemessenen Abschnitten der Lagerbohrungen aufgenommen. In der Einschublage stehen die Sicherungszapfen 30 im Bereich der sich über etwa 180° erstreckenden Umfangsnuten 24 der jeweiligen Sicherungskulisse 28 und das eigentliche Spannen erfolgt, indem die Verriegelungsstangen in entsprechender Weise um ihre Längsachsen gedreht und infolge des Zusammenwirkens der Spannexzenter 21 mit entsprechenden Spannflächen der Querausnehmungen 14 der Spannbolzen 13 eine formschlüssig feste Fixation der Formhälfte mit der zugeordneten Schnellspannplatte vermittelt.

Die andere Formhälfte, die bei geschlossener Spritzgießform mit der bereits gespannten Formhälfte durch geeignete Mittel in Schließlage gehalten ist, wird im Anschluß daran in der Weise gespannt, daß die Aufnahmeplatte der Maschine mit der anderen Schnellspannplatte auf die in Schließstellung befindliche Spritzgießform 35 bzw. letztere auf die an der anderen Maschinen-Aufnahmeplatte befestigte Schnellspannplatte zubewegt wird, wobei die Spannbolzen der genannten zweiten Formhälfte in die Aufnahmebohrungen 12 der zweiten Spannplatte eingreifen. Das eigentliche Spannen erfolgt dann in gleicher Weise wie oben beschrieben, indem die Verriegelungsstangen 16 in ihre vollen Einschublagen gebracht und durch Drehung um ihre Längsachsen mit ihren Spannexzentern 21 gegenüber den Spannflächen der Querausnehmungen der Spannbolzen 13 verspannt werden.

## Patentansprüche

1. Spannvorrichtung für Werkzeuge mit über seitliche Aufspannflächen vorstehenden und in der Nähe ihrer freien Enden Querausnehmungen aufweisenden Spannbolzen, mit einer Aufnahmebohrungen für die Werkzeug-Spannbolzen und diese Aufnahmebohrungen rechtwinklig schneidende Lagerbohrungen aufweisenden Schnellspannplatte und mit in den Lagerbohrungen drehbar und axial verschiebbar aufgenommenen Verriegelungsstangen mit in der Kupplungslage in die Querausnehmungen der Werkzeug-Spannbolzen eingreifenden und mit diesen durch Drehung verspannbaren Spannexzentern,
gekennzeichnet durch zwischen den Verriegelungsstangen (16) und der diese jeweils in den Lagerbohrungen (15) aufnehmenden Schnellspannplatte (10) formschlüssig zusammenwirkende Mittel (28, 30) zur Begrenzung der Axialbeweglichkeit der Verriegelungsstangen zwischen zwei axialen Endlagen und zur Sicherung gegen Drehungen im Verschiebebereich zwischen diesen Endlagen.

2. Spannvorrichtung nach Anspruch 1, dadurch gekennzeichnet, daß die Mittel zur Begrenzung der axialen Verschiebbarkeit der Verriegelungsstangen (16) zwischen den beiden axialen Endlagen und zur Verdrehsicherung im Verschiebebereich zwischen diesen Endlagen eine Längsnut (25) und einen in diese eingreifenden Sicherungszapfen (30) umfassen, die in den Endlagen außer Eingriff miteinander gelangen.

3. Spannvorrichtung nach Anspruch 2, dadurch gekennzeichnet, daß sich beidendig an die Längsnut (25) nach voneinander abgewandten Seiten Umfangsnuten (24, 26) anschließen, in die in den Endlagen der jeweils zugeordnete Sicherungszapfen (30) eingreift und in diesen Endlagen eine Drehung um die Verriegelungsstangen-Längsachse entsprechend der jeweiligen Umfangserstreckung der Umfangsnuten ermöglicht.

4. Spannvorrichtung nach Anspruch 3, dadurch gekennzeichnet, daß die Längsnut (25) und die Umfangsnuten (24, 26) sich jeweils in den Lagerzapfen (17) der Verriegelungsstangen (16) erstrecken und daß die Sicherungszapfen in quer zu den Lagerbohrungen verlaufenden Bohrungen (32) der Schnellspannplatten (10) aufgenommen sind und in die Lagerbohrungen (15) hineinragen sowie in die erwähnten Längsund Umfangsnuten eingreifen.

## Claims

1. Clamping device for tools comprising clamping bolts which project beyond lateral clamping surfaces and have transverse recesses in the proximity of their free ends, with a quick-acting clamping plate having receiving bores for the tool clamping bolts and bearing bores intersecting these receiving bores at right angles, and with locking rods, which are received in the bearing bores to be rotatable and axially displaceable, with tightening eccentrics which engage in the transverse recesses of the tool clamping bolts in the coupling position and are tightenable with these through rotation, characterised by means (28, 30), which mechanically positively co-operate between the locking rods (16) and the quick-acting clamping plate (10) receiving these respectively in the bearing bores (15), for limitation of the axial movability of the locking rods between two axial end positions and for securing against rotations in the displacement range between these end positions.

2. Clamping device according to claim 1, characterised thereby that the means for limitation of the axial displaceability of the locking rods (16) between the two axial end positions and for securing against rotation in the displacement range between these end positions comprises a longitudinal groove (25) and a securing stud (30) engaging therein, which come out of engagement with one another in the end positions.

3. Clamping device according to claim 2, characterised thereby that connected to the longitudinal groove (25) at both ends are circumferential grooves (24, 26), which face away from one another and in which the respectively associated securing stud (30) engages in the end positions and, in these end positions, makes possible a rotation about the locking rod longitudinal axis in correspondence with the respective circumferential extent of the circumferential grooves.

4. Clamping device according to claim 3, characterised thereby that the longitudinal groove (25) and the circumferential grooves (24, 26) each extend in the bearing pin (17) of the locking rods (16) and that the securing studs are received in bores (32), which extend transversely to the bearing bores, of the quick-acting clamping plates (10) and project into the bearing bores (15) as well as engage in the said longitudinal and circumferential grooves.

## Revendications

1. Dispositif de serrage pour un outillage avec des surfaces latérales de serrage en saillie sur lesquelles viennent s'appuyer au voisinage de leurs extrêmités libres des goujons transversaux de serrage, avec un perçage pour les goujons de serrage de l'outillage, ce perçage étant perpendiculaire à la plaque de serrage rapide et des tiges de verrouillage pivotantes et coulissantes dans un trou, qui coopèrent avec les goujons de serrage et constituent un excentrique de serrage caractérisé en ce que les tiges de verrouillage (16) introduites dans les perçages (15) de palier de la plaque de serrage rapide (10) constituent un moyen (28, 30) de limitation de déplacement axial des tiges de verrouillage entre deux butées axiales et une sécurité contre la rotation entre ces deux butées dans la région de déplacement.

2. Dispositif de serrage selon la revendication 1, caractérisé en ce que le moyen pour limiter la possibilité de déplacement des tiges de verrouillage (16) entre les deux butées axiales et pour assurer la sécurité contre la rotation dans la région de déplacement axial consistent en une rainure longitudinale (25) dans laquelle pénètre un tenon de sécurité (30) qui coopèrent l'un avec l'autre dans les butées d'extrêmité.

3. Dispositif de serrage selon la revendication 2, caractérisé en ce que la rainure longitudinale (25) est terminée à ses deux extrêmités par des rainures périphériques (24, 26) dans lesquelles les extrêmités des tenons de sécurité (30) et en ce que à ces extrêmités un pivotaient autour de l'axe longitudinal est rendu possible par les parties linéaires périphériques.

4. Dispositif de serrage selon la revendication 3, caractérisé en ce que le palier de tenon (17) des tiges de verrouillage (16) comprend la rainure longitudinale (25) et les rainures périphériques (24, 26) et en ce que les tenons de sécurité font saillie perpendiculairement par les trous de passage (32) de la plaque à serrage rapide (10) dans les perçages de palier (15) pour coopérer avec les rainures longitudinales et périphériques précitées.
